# EUROPÄISCHE PATENTSCHRIFT

(11) **EP 3 762 734 B1**
(45) Veröffentlichungstag und Bekanntmachung des Hinweises auf die Patenterteilung: **24.07.2024**
(21) Anmeldenummer: 19700475.7
(22) Anmeldetag: 10.01.2019
(51) Int. Cl.: G01S 13/931, G01S 13/87, G01S 7/03

(54) **RADARSENSORSYSTEM UND VERFAHREN ZUM BETREIBEN EINES RADARSENSORSYSTEMS**
RADAR SENSOR SYSTEM AND METHOD FOR OPERATING A RADAR SENSOR SYSTEM
SYSTÈME DE CAPTEURS RADAR ET PROCÉDÉ DESTINÉ À FAIRE FONCTIONNER UN SYSTÈME DE CAPTEURS RADAR

(30) Priorität: 08.03.2018 DE 102018203464
(43) Veröffentlichungstag der Anmeldung: 13.01.2021
(73) Patentinhaber: Robert Bosch GmbH, 70442 Stuttgart (DE)
(72) Erfinder: MAYER, Marcel, 89173 Lonsee (DE); BAUR, Klaus, 88487 Mietingen (DE); SCHOOR, Michael, 70195 Stuttgart (DE)
(86) Internationale Anmeldenummer: PCT/EP2019/050600
(87) Internationale Veröffentlichungsnummer: WO 2019/170304

(56) Entgegenhaltungen:
- WO-A1-2016/054291
- DE-A1- 102015 218 542
- US-A1- 2016 187 464

## Beschreibung

Die Erfindung betrifft ein Radarsensorsystem. Die Erfindung betrifft ferner ein Verfahren zum Betreiben eines Radarsensorsystems.

### Stand der Technik

Aktuell befindet sich der Markt der Fahrerassistenzsysteme im Umbruch. Während in den letzten Jahren hauptsächlich preisgünstige Sensorik im Vordergrund stand, zeigt sich aktuell der Trend zum hochautonomen Fahren mit wesentlich höheren Ansprüchen an die Sensorik. Es werden bei Fahrzeugen mit einem hohem Grad an Fahrerassistenzfunktionen oder automatisierten Fahrfunktion zunehmend mehr Sensoren zum Steuern und Regeln der Funktionen verbaut.

Die in die Fahrzeuge eingebauten Sensoren können beispielsweise Radar-Sensoren oder LIDAR-Sensoren sein und müssen eine möglichst hohe Genauigkeit aufweisen. Durch ein Verwenden von präzisen Sensoren kann die Funktionssicherheit und die Zuverlässigkeit der autonomen oder teilautonomen Fahrfunktionen gewährleistet werden. Radargeräte mit synchronisierten HF-Bauelementen sind aus WO 2016/054291 A1, DE 10 2015 218542 A1 und US 2016/187464 A1 bekannt.

### Offenbarung der Erfindung

Es ist eine Aufgabe der vorliegenden Erfindung, ein Radarsensorsystem mit verbesserter Betriebscharakteristik bereitzustellen.

Gemäß einem ersten Aspekt wird die Aufgabe gelöst mit einem Radarsensorsystem, aufweisend:
- eine definierte Anzahl von HF-Bauelementen, wobei jedes der HF-Bauelemente jeweils wenigstens eine Antenne zum Senden und/oder Empfangen von Radarwellen und wenigstens eine Antennensteuerung zum Betreiben der wenigstens einen Antenne aufweist; und
- ein Synchronisationsnetzwerk, an welches alle HF-Bauelemente funktional angebunden sind und über das ein HF-Signal für alle HF-Bauelemente bereitgestellt ist; wobei
- wenigstens zwei HF-Bauelemente jeweils eine Selbstspeisungseinrichtung zum Rückkoppeln eines definierten Anteils von Leistung des in das Synchronisationsnetzwerk eingespeisten HF-Signals aufweisen, wobei zu einem definierten Zeitpunkt das HF-Signal für alle HF-Bauelemente von einem als Master HF-Bauelement betriebenen HF-Bauelement erzeugt ist, wobei
- das Radarsensorsystem funktional in wenigstens zwei Teilsensorsysteme geteilt ist, wobei die eine Selbstspeisungseinrichtung aufweisenden HF-Bauelemente als nicht zeitgleich betriebene Master HF-Bauelemente betrieben werden, die in jeweils einem der Teilsensorsysteme zusammen mit wenigstens einem als Slave HF-Bauelement betriebenen HF-Bauelement angeordnet sind, wobei das nicht als Master HF-Bauelement betriebene HF-Bauelement als Slave HF-Bauelement betrieben wird.

Auf diese Weise wird ein Radarsensorsystem bereitgestellt, welches ein Synchronisationsnetzwerk aufweist, an welches wenigstens zwei "Master-fähige" HF-Bauelemente angebunden sind. Aufgrund der Tatsache, dass zu einem gegebenen Zeitpunkt allerdings nur ein einziger Master auch als solcher fungiert, d.h., ein HF-Signal in das Synchronisationsnetzwerk und damit für alle HF-Bauelemente bereitstellt, wird eine erhöhte Redundanz des gesamten Systems realisiert. Indem nämlich bei einem Ausfall eines als Master agierenden HF-Bauelements ein anderes HF-Bauelement die Funktion des Masters übernimmt, ist eine Ausfallsicherheit verbessert. Zudem können aus dem Radarsensorsystem optional autark betreibbare Teilsensoren gebildet werden, wodurch eine definierte Leistungsfähigkeit des Radarsensorsystems bereitgestellt wird. Bezogen auf die Antennen der HF-Bauelemente des Radarsensorsystems werden auf diese Weise vorteilhaft symmetrische Verhältnisse erreicht. Vorteilhaft wird dadurch erreicht, dass ein Master betreffend die radartechnischen Hauptfunktionalitäten Senden und Empfangen wie ein Slave fungiert.

Gemäß einem zweiten Aspekt wird die Aufgabe gelöst mit einem Verfahren zum Betreiben eines Radarsensorsystems, aufweisend die Schritte:
- Senden und Empfangen von Radarwellen mittels einer definierten Anzahl von HF-Bauelementen mittels jeweils mindestens einer Antenne; und
- Synchronisieren einer HF-Betriebsfrequenz der HF-Bauelemente mittels eines Synchronisationsnetzwerks, das mit den HF-Bauelementen verbunden ist, wobei zu einem definierten Zeitpunkt nur ein einziges HF-Bauelement ein HF-Signal in das Synchronisationsnetzwerk einspeist, wobei mittels einer Selbstspeisungseinrichtung das das HF-Signal einspeisende HF-Bauelement einen definierten Anteil von Leistung des HF-Signals an sich selbst zurückführt,
wobei die eine Selbstspeisungseinrichtung aufweisenden HF-Bauelemente als nicht zeitgleich betriebene Master HF-Bauelemente betrieben werden, die in jeweils einem der Teilsensorsysteme zusammen mit wenigstens einem als Slave HF-Bauelement betriebenen HF-Bauelement angeordnet sind, wobei das nicht als Master HF-Bauelement betriebene HF-Bauelement als Slave HF-Bauelement betrieben wird.

Vorteilhafte Weiterbildungen des Radarsensorsystems sind Gegenstand von abhängigen Ansprüchen.

Eine vorteilhafte Weiterbildung des Radarsensorsystems ist dadurch gekennzeichnet, dass mittels des Synchronisationsnetzwerks ferner wenigstens eines aus Folgendem für alle HF-Bauelemente bereitstellbar ist: Triggersignal, Taktsignal. Auf diese Weise wird eine hohe Kohärenz bzw. Synchronität aller am Radarsensorsystem beteiligten HF-Bauelemente unterstützt.

Eine weitere vorteilhafte Weiterbildung des Radarsensorsystems sieht vor, dass die Selbstspeisungseinrichtung als eine Kopplungseinrichtung ausgebildet ist. Auf diese Weise wird eine Art "Hybridkoppler" bereitgestellt, mit dem die vom Master-HF-Bauelement rückgespeiste Leistung auf einfache Weise dimensionierbar ist.

Eine weitere vorteilhafte Weiterbildung des Radarsensorsystems ist dadurch gekennzeichnet, dass die Selbstspeisungseinrichtung als eine Teilereinrichtung ausgebildet ist. Auf diese Weise wird vorteilhaft eine alternative Rückkopplungseinrichtung bereitgestellt, die unter Umständen einfacher zu fertigen ist als der Hybridkoppler.

Eine weitere vorteilhafte Weiterbildung des Radarsensorsystems zeichnet sich dadurch aus, dass die Teilereinrichtung als ein Hohlleiternetzwerk ausgebildet ist. Auf diese Weise wird eine konkrete Ausgestaltungsform der Teilereinrichtung bereitgestellt.

Eine weitere vorteilhafte Weiterbildung des Radarsensorsystems zeichnet sich dadurch aus, dass die Selbstspeisungseinrichtung derart ausgebildet ist, dass mittels des HF-Signals eine definierte Leistung für alle HF-Bauelemente bereitstellbar ist. Eine hohe Kohärenz bzw. Synchronität der HF- Bauelemente ist auf diese Weise bereitstellbar.

Eine weitere vorteilhafte Weiterbildung des Radarsensorsystems ist dadurch gekennzeichnet, dass Ports der HF-Bauelemente als HF-Sendeports oder als HF-Empfangsports konfigurierbar sind. Auf diese Weise ist eine hohe Designfreiheit für das Radarsensorsystem unterstützt, wobei Sende- und Empfangsports an konkrete Erfordernisse angepasst werden können.

Im Folgenden werden anhand von stark vereinfachten schematischen Darstellungen bevorzugte Ausführungsbeispiele der Erfindung näher erläutert. Dabei zeigen:
- Fig. 1: eine schematische Darstellung eines vorgeschlagenen Radarsensorsystems;
- Fig. 2: eine etwas detailliertere schematische Darstellung des Radarsensorsystems von Fig. 1;
- Fig. 3: eine schematische Darstellung eines Synchronisationsnetzwerks mit Dämpfungswerten;
- Fig. 4: eine schematische Darstellung einer weiteren Ausführungsform eines vorgeschlagenen Radarsensorsystems;
- Fig. 5: eine schematische Darstellung einer weiteren Ausführungsform eines vorgeschlagenen Radarsensorsystems; und
- Fig. 6: ein prinzipielles Ablaufdiagramm eines vorgeschlagenen Verfahrens zum Betreiben eines Radarsensorsystems.

In den Figuren weisen dieselben konstruktiven Elemente jeweils dieselben Bezugsziffern auf.

Aktuelle Radarsensoren weisen üblicherweise viele HF-Kanäle zum Erzeugen und zum Empfangen von Radarwellen auf. Dabei können im Normalbetrieb alle HF-Bausteine gleichzeitig im Betrieb sein. Derartige Radarsensoren können bei einer symmetrischen Ausgestaltung in mehrere Teilsensoren unterteilt werden. Jeder Teilsensor kann somit einen entsprechenden Anteil an HF-Bausteinen bzw. HF-Kanälen des Radarsensors aufweisen. Somit kann beispielsweise ein Teilsensor des Radarsensors in einem möglichen Notbetrieb eine autonome Fahrt eines Fahrzeugs bei einer eingeschränkten Geschwindigkeit ermöglichen. Dies kann auch dann realisiert werden, wenn Komponenten von anderen Teilsensoren nicht mehr funktionsfähig sind.

Der Aufbau des Radarsensorsystems kann beispielsweise aus bekannten kostengünstigen Basiskomponenten bestehen. Durch eine Parallelisierung mehrerer Bauelemente vom gleichen Typ lässt sich eine Verbesserung der Leistung und der Genauigkeit des Radarsensorsystems realisieren. Darüber hinaus kann durch die Verwendung mehrerer gleichartiger Bauelemente eine Redundanz zum Bereitstellen einer zuverlässigen Funktion der Anordnung ermöglicht sein. Hierdurch kann technisch einfach ein Notbetrieb des Radarsensorsystems umgesetzt werden. Dazu muss aber neben den HF-Komponenten und den Mikrocontrollern auch eine Redundanz bei der Takterzeugung vorhanden sein. Die HF-Komponenten können beispielsweise in Form von MMICs (engl. monolithic microwave integrated circuit) aufgebaute Antennensteuerungen oder Verstärker sein.

Dadurch, dass alle HF-Komponenten von einem gemeinsamen Taktgeber mit einer Nutz- bzw. Basisfrequenz gespeist werden, weist das Radarsensorsystem eine hohe Kohärenz auf. Insbesondere können die unterschiedlichen HF-Bauelemente mit identischer Betriebsfrequenz betrieben werden, wodurch eine redundante und kohärente Taktversorgung von mehreren HF-Bauelementen ermöglicht wird.

Vorzugsweise kann zumindest ein Teil der im Radarsensorsystem verwendeten HF-Bauelemente mit einem Takt bzw. einer Nutzfrequenz versorgt werden. Im Normalbetrieb können alle HF-Bauelemente bzw. Antennensteuerungen des Radarsensorsystems mit demselben Takt von mindestens einem Taktgeber versorgt und somit alle Daten miteinander verrechnet werden.

In einem Normalbetrieb des Radarsensorsystems erfolgt durch mindestens einen Taktgeber eine gleichzeitige Taktversorgung aller Antennensteuerungen bzw. HF-Bauelemente. Durch die Taktversorgung aus einer Quelle kann eine hohe Kohärenz aller HF-Bauelemente des Radarsensorsystems realisiert werden. Weist ein Taktgeber beispielsweise einen Defekt auf, dann kann über die Steuereinheit mindestens ein weiterer Taktgeber zum Erzeugen eines HF-Signals aktiviert bzw. zugeschaltet werden.

Üblicherweise wird in einem Radarsensorsystem einem Bauteil die Rolle des Masters, der die Hochfrequenzerzeugung übernimmt, zugeordnet und die anderen HF-Bauelemente werden von diesem mit dem HF- Synchronisationssignal versorgt. Das HF-Synchronisationssignal ist erforderlich, um eine hohe Kohärenz der HF-Bauelemente 10a...10d bereit zu stellen, um eine hohe Winkelauflösung des Radarsensorsystems 100 zu ermöglichen. Dafür werden im Stand der Technik spezialisierte Bausteine für die Erzeugung der Hochfrequenz und für die weitere Signalverarbeitung eingesetzt.

Jedoch zeigt sich bei immer höheren Kosten für die HF-Bausteinentwicklung, beispielsweise bei höheren Maskenkosten für geringere Knotengrößen, dass die Verwendung von mehreren Bausteinen desselben Typs Kostenvorteile bringen kann, obwohl die eigentliche Siliziumfläche größer ist. Mit der Erfindung ergibt sich die vorteilhafte Möglichkeit, ein kostengünstiges und redundantes Radarsensorsystem zu realisieren.

Dabei wird vorgeschlagen, dass für das Radarsensorsystem 100 sowohl ein Redundanz- als auch ein Selbstspeisungskonzept realisiert werden. Dabei verfügt eines der HF-Bauelemente über eine Selbstspeisung, wobei ein Ausfall eines Teilsensors durch den anderen Teilsensor kompensiert werden kann und umgekehrt.

Dabei ist nicht entscheidend, welches HF-Bauelement im jeweiligen Teilsensor über eine Selbstspeisung verfügt. Wichtig ist lediglich, dass jeweils ein HF-Bauelement in einem Teilsensor eine Selbstspeisung hat. Die Selbstspeisung bezieht sich in dem Beispiel wenigstens auf die HF-Leitung (LO-Leitung). Jedoch kann es beispielsweise auch möglich sein, optional noch eine Takt- und/oder Triggerleitung für das Synchronisationsnetzwerk 20 vorzusehen.

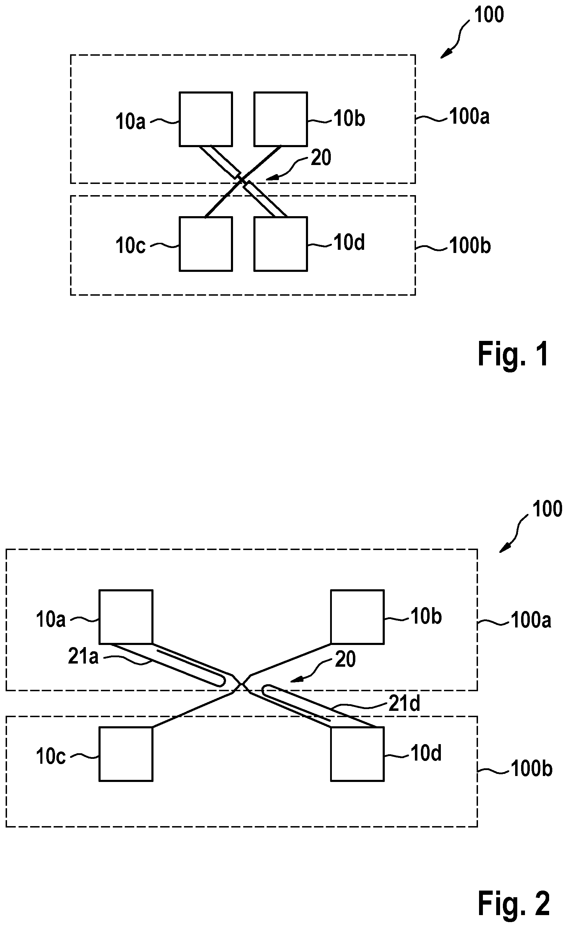

Fig. 1 zeigt eine schematische Darstellung eines derartigen, vorgeschlagenen Radarsensorsystems 100. Das Radarsensorsystem 100 weist vier HF-Bauelemente 10a...10d auf, die als MMICs ausgebildet sind. Dabei ist die Anzahl vier lediglich beispielhaft, das vorgeschlagene Radarsensorsystem 100 kann auch mehr als vier HF-Bauelemente aufweisen. Ferner erkennbar ist ein Synchronisationsnetzwerk 20, an das sämtliche HF-Bauelemente 10a...10d funktional angeschlossen sind und das zum Synchronisieren der HF-Betriebsfrequenz aller HF-Bauelemente 10a...10d verwendet wird.

Man erkennt, dass die beiden zum Einspeisen des HF-Signals fähigen ("Master-fähigen") HF-Bauelemente 10a, 10d mit zwei Leitungen des Synchronisationsnetzwerks 20 verbunden sind, was bedeutet, dass eine definierte Rückkopplung von Leistung an das einspeisende HF-Bauelement erfolgt. Auf diese Weise sind im Radarsensorsystem 100 zwei masterfähige HF-Bauelemente 10a, 10d vorhanden, wobei zu einem definierten Zeitpunkt des Normalbetriebs allerdings lediglich ein einzelnes Bauelement als Master-HF-Bauelement fungiert und die restlichen drei anderen HF-Bauelemente als Slave-HF-Bauelemente.

Aufgrund der Aufteilbarkeit des Radarsensorsystems 100 in zwei autark betreibbare Teilsensoren 100a, 100b ist zudem unterstützt, dass z.B. in einem Fehlerfall auf diese Weise eine reduzierte Funktionalität des gesamten Radarsensorsystems 100 immer noch in einem gewissen Ausmaß erhalten bleibt. Im Verbund mit allen HF-Bauelementen ist eine Funktionalität des gesamten Radarsensorsystems 100 wesentlich erhöht. Eine Ausfallsicherheit des gesamten Radarsensorsystems 100 ist auf diese Weise vorteilhaft erhöht, wobei die radartechnischen Grundfunktionalitäten "Senden" und "Empfangen" auch vom Master-HF-Bauelement wie von einem Slave-HF-Bauelement durchgeführt werden.

Ferner weist das Radarsensorsystem 100 Antennensteuerungen der HF-Bauelemente 10a...10d auf. Der Einfachheit halber sind weitere Komponenten der HF-Bauelemente 10a...10d, die zum Aussenden und zum Empfangen von Radarwellen erforderlich sind, wie beispielsweise Antennen, Verstärker, Oszillatoren, usw. in den Figuren nicht dargestellt.

Eine mögliche Realisierung des Radarsensorsystems von Fig. 1 ist in Fig. 2 in einem höheren Detaillierungsgrad dargestellt. Dabei ist von den HF-Bauelementen 10a, 10d (lediglich exemplarisch, es könnten auch die HF-Bauelemente 10b, 10c sein), ein geringer Teil der Signalleistung (z.B. -10dB) rückkoppelbar, weil der HF-Eingang (LO-Eingang) der genannten HF-Bauelemente beispielsweise 14 dB weniger Eingangsleistung benötigt, als die Ausgänge liefern.

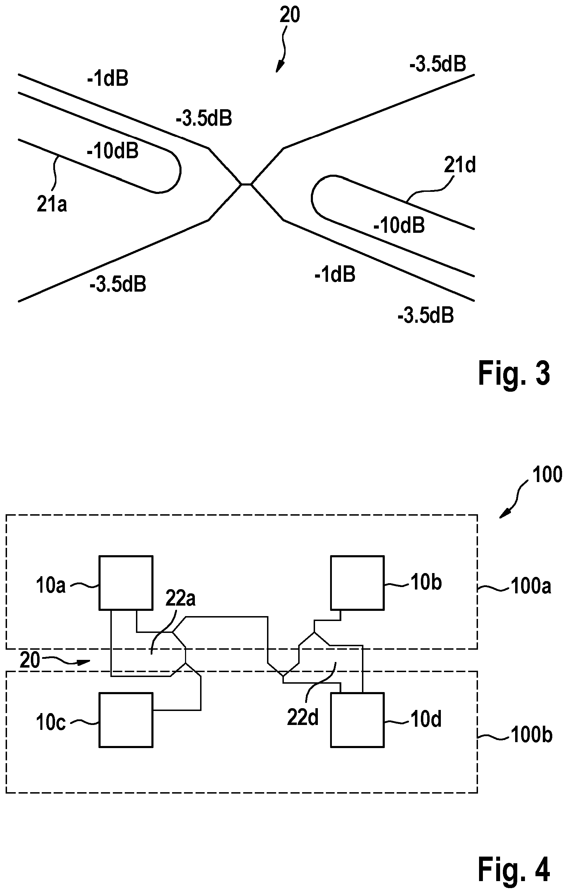

Ein Nachteil der Anordnung von Fig. 2 kann die HF-Versorgung des Slave-HF-Bauelements sein, also jenes HF-Bauelements, welches nicht das HF-Signal bereitstellt. Wenn im Master- und im Slave Fall jeweils das gleiche HF-Bauelement als HF-Eingang dient, dann liegt die HF-Leistung zwar bei -10 dB unter dem TX-Leistungswert im Master-Fall, aber bei -18 dB im Slave-Fall, wie aus der nachfolgenden Fig. 3 ableitbar ist, sodass die Leistung herkömmlicherweise nicht ausreichen würde.

Können jedoch, wie es bei aktuellen HF-Bauelementen möglich ist, zwei Ports sowohl HF-Sender als auch HF-Empfänger sein, dann werden vom Master- zum Slave-Fall die HF-Eingangsports geändert und die Eingangsleistung von -8 dB unter der Sendeleistung reicht für die Versorgung aller Ports wieder aus, wobei in allen Fällen noch Leitungsverluste berücksichtigt werden. In Summe stimmt aber in diesem vorgeschlagenen Ansatz das Verhältnis von Ausgangsleistung zu HF-Eingangsleistung.

Man erkennt, dass in der Konfiguration des Radarsensorsystems 100 von Fig. 2 eine Kopplungsstruktur zur Rückkopplung von Leistung benutzt wird, wobei diese zu einem gegebenen Zeitpunkt entweder über die Kopplungseinrichtung 21a oder 21d an das jeweilige HF-Bauelement 10a, 10d rückgekoppelt wird. Auf diese Weise wird erreicht, dass sämtlichen an das Synchronisationsnetzwerk 20 angeschlossenen HF-Bauelementen ein definiertes Ausmaß an Leistung aus dem HF-Signal zugeführt wird. Auf diese Weise ist eine symmetrische Leistungsaufteilung unterstützt, wodurch ein hoch performanter Betrieb des Radarsensorsystems 100 unterstützt ist.

Fig. 3 zeigt Gegebenheiten des Synchronisationsnetzwerks 20 anhand von Dämpfungswerten in dB, die sich auf eine Signalleistung des eingespeisten HF-Signals beziehen. Erkennbar sind Kopplungseinrichtungen 21a, 21d, mittels derer -10 dB Ausgangsleistung an das HF-Bauelement 10a, 10d rückkoppelbar ist. Ferner erkennbar ist, dass pro Arm des Synchronisationsnetzwerks 20 -3,5 dB Verlust auftreten. Im Ergebnis wird dadurch erreicht, dass vom als Master fungierenden HF-Bauelement 10a, 10d zu den anderen HF-Bauelementen 10b, 10c eine Dämpfung von ungefähr -8 dB erreicht wird. Erkennbar ist ein beispielhafter Verlust der Leitung von -1 dB, wobei der Verlust insbesondere vom Material und von der Länge der Leitung abhängt.

Fig. 4 zeigt eine weitere Ausführungsform des vorgeschlagenen Radarsensorsystems 100. In diesem Falle weist das Synchronisationsnetzwerk 20 zum Rücckoppeln von Leistung des HF-Signals Teilereinrichtungen 22a, 22d auf, die aus T-Teilerelementen aufgebaut sind. Bei Verwendung von geeigneten Transmissionskoeffizienten für die T-Teilerelemente kann auf diese Weise eine gleichmäßige HF-Verteilung für alle HF-Bauelemente bereitgestellt werden. Auch in dieser Konfiguration ist erkennbar, dass die beiden zur Einspeisung des HF-Signals fähigen HF-Bauelemente 10a, 10d jeweils zwei Speiseleitungen aufweisen, wobei die beiden Speiseleitungen von den Teilereinrichtungen 22a, 22d realisiert werden. Im normalen Betriebsfalle fungiert dabei lediglich ein einziges der HF-Bauelemente 10a, 10d als Master-HF-Bauelement. Auch in der Konfiguration von Fig. 4 kann das Radarsensorsystem 100 funktional in zwei autark betreibbare Teilsensoren 100a, 100b aufgeteilt werden.

Welche der genannten Rückkopplungseinrichtungen von Fig. 2 oder Fig. 4 zur Rückkopplung von Signalleistung eingesetzt wird, hängt von den strukturellen Gegebenheiten des Radarsensorsystems 100, insbesondere von fertigungstechnischen Möglichkeiten des Synchronisationsnetzwerks 20 ab. Beispielsweise ist es denkbar, dass die Teilereinrichtungen 22a, 22d (z.B. Hohlleiter in Form eines Hohlleiternetzwerks) von Fig. 4 leichter zu fertigen sind als die Koppeleinrichtungen 21a, 21d von Fig. 2. Vorteilhaft lassen sich in Hohlleiternetzwerken sowohl Teiler- als auch Koppeleinrichtungen realisieren.

In den vorhergehenden Betrachtungen wurden die selbstgespeisten HF-Bauelemente im Radarsensorsystem 100 immer über die Diagonale eingesetzt. Dies ist insbesondere durch eine dadurch erreichte ausbalancierte Anordnung der Sender der HF-Bauelemente begründet, wenn für die HF-Aus- und Einspeisung "normale" HF-Sendekanäle verwendet werden. Auf diese Weise "verliert" ein selbstgespeistes HF-Bauelement nicht nur einen Sender, sondern zwei (HF-Bauelemente 10a, 10d).

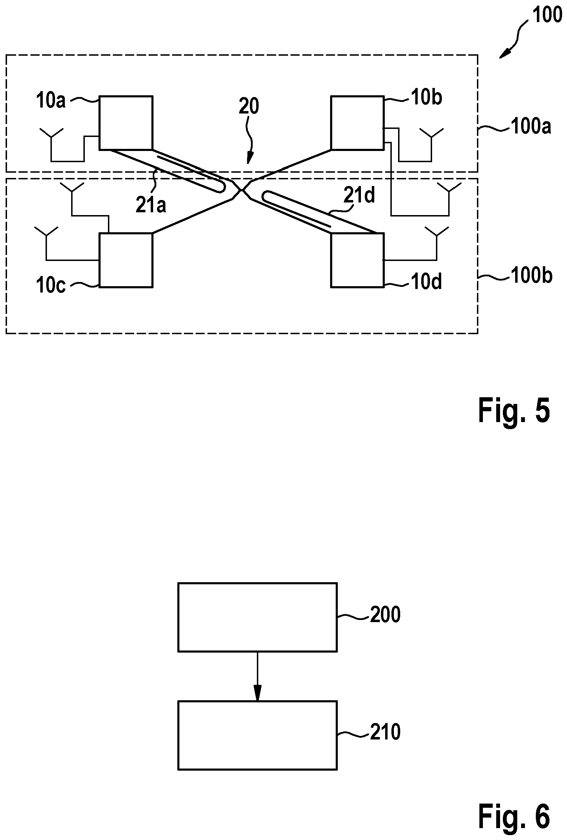

Wenn nun, wie in Fig. 5 dargestellt, die selbstgespeisten HF-Bauelemente 10a, 10d des Radarsensorsystems 100 über die Diagonale angeordnet sind, dann können auf jeder Seite des Radarsensorsystems 100 insgesamt drei Sendekanäle realisiert werden (HF-Bauelement 10a: ein Sendekanal, HF-Bauelement 10c: zwei Sendekanäle, HF-Bauelement 10b: zwei Sendekanäle, HF-Bauelement 10d: ein Sendekanal).

Es versteht sich von selbst, dass die Konfiguration von Fig. 5 konkrete Ausgestaltungen von HF-Bauelementen betrifft und daher, insbesondere was die Anzahl der Sendekanäle betrifft, lediglich beispielhaft ist.

Ein als Master fungierendes HF-Bauelement übernimmt im Normalbetrieb des Radarsensorsystems 100 mehrere der folgend genannten Aufgaben:
- Frequenzerzeugung mittels PLL (z.B. 77 GHz) und eventuell eine Takterzeugung (z.B. 50 MHz)
- Ausgabe und Verstärkung des HF-Synchronisationssignals
- Teilweise die Bereitstellung des Sendesignals
- Mischung ins Basisband
- Eventuell AD-Wandlung und Ausgabe der Digitalsignale

Die beiden erstgenannten Aufgaben werden in der Regel ausschließlich vom Master-HF-Bauelement übernommen, wobei die drei letztgenannten Aufgaben von allen beteiligten HF-Bauelementen 10a...10d des Radarsensorsystems 100 übernommen werden.

Vorteilhaft kann das vorgeschlagene Verfahren nicht nur in einem Radarsensorsystem, sondern auch in jeglichem Produkt mit mehreren HF-Bauelementen eingesetzt werden. Vorzugsweise wird das vorgeschlagene Radarsensorsystem im Automobilbereich eingesetzt.

Fig. 6 zeigt ein prinzipielles Ablaufdiagramm eines Verfahrens zum Betreiben eines Radarsensorsystems 100.

In einem Schritt 200 wird ein Senden und Empfangen von Radarwellen mittels einer definierten Anzahl von HF-Bauelementen 10a...10n mittels jeweils mindestens einer Antenne durchgeführt.

In einem Schritt 210 wird ein Synchronisieren einer HF-Betriebsfrequenz der HF-Bauelemente 10a...10n mittels eines Synchronisationsnetzwerks 20, das mit den HF-Bauelementen 10a...10d verbunden ist, durchgeführt, wobei zu einem definierten Zeitpunkt nur ein einziges HF-Bauelement 10a...10d ein HF-Signal in das Synchronisationsnetzwerk 20 einspeist, wobei mittels einer Selbstspeisungseinrichtung 21a, 21d; 22a, 22d das das HF-Signal einspeisende HF-Bauelement 10a...10d einen definierten Anteil von Leistung des HF-Signals an sich selbst zurückführt.

Vorteilhaft kann das vorgeschlagene Verfahren als eine Software implementiert werden, welche in einem Steuergerät (nicht dargestellt) des Radarsensorsystems 100 abläuft. Vorteilhaft ist auf diese Weise eine einfache Änderbarkeit des Verfahrens unterstützt.

Der Fachmann kann somit vorgehend auch nicht oder nur teilweise beschriebene Ausführungsformen realisieren, ohne vom Kern der Erfindung abzuweichen.

## Patentansprüche

1. Radarsensorsystem (100), aufweisend:
- eine definierte Anzahl von HF-Bauelementen (10a...10d), wobei jedes der HF-Bauelemente (10a...10d) jeweils wenigstens eine Antenne zum Senden und/oder Empfangen von Radarwellen und wenigstens eine Antennensteuerung zum Betreiben der wenigstens einen Antenne aufweist; und
- ein Synchronisationsnetzwerk (20), an welches alle HF-Bauelemente (10a...10d) funktional angebunden sind und über das ein HF-Signal für alle HF-Bauelemente (10a...10d) bereitgestellt ist; wobei
- wenigstens zwei HF-Bauelemente (10a...10n) jeweils eine Selbstspeisungseinrichtung (21a...21d; 22a...22d) zum Rückkoppeln eines definierten Anteils von Leistung des in das Synchronisationsnetzwerk (20) eingespeisten HF-Signals aufweisen, wobei zu einem definierten Zeitpunkt das HF-Signal für alle HF-Bauelemente (10a...10d) von einem als Master HF-Bauelement (10a...10d) betriebenen HF-Bauelement (10a...10n) erzeugt ist, wobei
- das Radarsensorsystem (100) funktional in wenigstens zwei Teilsensorsysteme (100a, 100b) geteilt ist, **dadurch gekennzeichnet, dass** die eine Selbstspeisungseinrichtung (21a...21d; 22a...22d) aufweisenden HF Bauelemente (10a...10n) als nicht zeitgleich betriebene Master HF-Bauelemente (10a...10n) betrieben werden, die in jeweils einem der Teilsensorsysteme zusammen mit wenigstens einem als Slave HF-Bauelement (10a...10n) betriebenen HF-Bauelement (10a...10d) angeordnet sind, wobei das nicht als Master HF-Bauelement (10a...10d) betriebene HF-Bauelement als Slave HF-Bauelement (10a...10n) betrieben wird.

2. Radarsensorsystem (100) nach Anspruch 1, wobei mittels des Synchronisationsnetzwerks (20) ferner wenigstens eines aus Folgendem für alle HF-Bauelemente (10a...10d) bereitgestellt ist: Triggersignal, Taktsignal.

3. Radarsensorsystem (100) nach Anspruch 1 oder 2, wobei die Selbstspeisungseinrichtung (21a, 21d) als eine Kopplungseinrichtung ausgebildet ist.

4. Radarsensorsystem (100) nach Anspruch 1 oder 2, wobei die Selbstspeisungseinrichtung (22a, 22d) als eine Teilereinrichtung ausgebildet ist.

5. Radarsensorsystem (100) nach Anspruch wobei die Teilereinrichtung als ein Hohlleiternetzwerk ausgebildet ist.

6. Radarsensorsystem (100) nach einem der vorhergehenden Ansprüche, wobei die Selbstspeisungseinrichtung (21a, 21d; 22a, 22d) derart ausgebildet ist, dass mittels des HF-Signals eine definierte Leistung für alle HF-Bauelemente (10a... 10d) bereitgestellt ist.

7. Radarsensorsystem (100) nach einem der vorhergehenden Ansprüche, wobei Ports der HF-Bauelemente (10a... 10d) als HF-Sendeports oder als HF-Empfangsports konfiguriert sind.

8. Verfahren zum Betreiben eines Radarsensorsystems (100), aufweisend die Schritte:
- Senden und Empfangen von Radarwellen mittels einer definierten Anzahl von HF-Bauelementen (10a...10n) mittels jeweils mindestens einer Antenne; und
- Synchronisieren einer HF-Betriebsfrequenz der HF-Bauelemente (10a...10n) mittels eines Synchronisationsnetzwerks (20), das mit den HF-Bauelementen (10a...10d) verbunden ist, wobei zu einem definierten Zeitpunkt nur ein einziges HF-Bauelement (10a...10d) ein HF-Signal in das Synchronisationsnetzwerk (20) einspeist, wobei mittels einer Selbstspeisungseinrichtung (21a, 21d; 22a, 22d) das das HF-Signal einspeisende HF-Bauelement (10a...10d) einen definierten Anteil von Leistung des HF-Signals an sich selbst zurückführt, **dadurch gekennzeichnet, dass** die eine Selbstspeisungseinrichtung (21a...21d; 22a...22d) aufweisenden HF Bauelemente (10a...10n) als nicht zeitgleich betriebene Master HF-Bauelemente (10a...10n) betrieben werden, die in jeweils einem der Teilsensorsysteme zusammen mit wenigstens einem als Slave HF-Bauelement (10a...10n) betriebenen HF-Bauelement (10a...10d) angeordnet sind, wobei das nicht als Master HF-Bauelement (10a...10d) betriebene HF-Bauelement als Slave HF-Bauelement (10a...10n) betrieben wird.

## Claims

1. Radar sensor system (100), comprising:
- a defined number of RF components (10a...10d), each of the RF components (10a...10d) comprising at least one antenna for transmitting and/or receiving radar waves and at least one antenna controller for operating the at least one antenna; and
- a synchronization network (20), to which all of the RF components (10a...10d) are functionally linked, that is used to provide an RF signal for all of the RF components (10a...10d); wherein
- at least two RF components (10a...10n) each comprise a self-supply device (21a...21d; 22a... 22d) for feeding back a defined proportion of power in the RF signal supplied to the synchronization network (20), the RF signal for all of the RF components (10a...10d) being generated at a defined time by an RF component (10a...10d) that is operated as a master RF component (10a...10d), wherein
- the radar sensor system (100) is functionally divided into at least two sensor subsystems (100a, 100b), **characterized in that** the RF components (10a...10n) comprising a self-supply device (21a...21d; 22a...22d) are operated as non-concurrently operated master RF components (10a...10n) that are each arranged in one of the sensor subsystems together with at least one RF component (10a...10n) that is operated as a slave RF component (10a...10d), the RF component that is not operated as a master RF component (10a...10d) being operated as a slave RF component (10a...10n).

2. Radar sensor system (100) according to Claim 1, wherein the synchronization network (20) is further used to provide at least one of the following for all of the RF components (10a...10d): trigger signal, clock signal.

3. Radar sensor system (100) according to Claim 1 or 2, wherein the self-supply device (21a, 21d) is in the form of a coupling device.

4. Radar sensor system (100) according to Claim 1 or 2, wherein the self-supply device (22a, 22d) is in the form of a divider device.

5. Radar sensor system (100) according to Claim 4, wherein the divider device is in the form of a waveguide network.

6. Radar sensor system (100) according to one of the preceding claims, wherein the self-supply device (21a, 21d; 22a, 22d) is designed such that the RF signal is used to provide a defined power for all of the RF components (10a...10d).

7. Radar sensor system (100) according to one of the preceding claims, wherein ports of the RF components (10a...10d) are configured as RF transmission ports or as RF reception ports.

8. Method for operating a radar sensor system (100), comprising the steps of:
- transmitting and receiving radar waves by means of a defined number of RF components (10a...10n) by means of at least one antenna in each case; and
- synchronizing an RF operating frequency of the RF components (10a...10n) by means of a synchronization network (20) that is connected to the RF components (10a...10d), wherein only a single RF component (10a...10d) supplies an RF signal to the synchronization network (20) at a defined time, a self-supply device (21a, 21d; 22a, 22d) being used by the RF component (10a...10d) supplying the signal to feed back a defined proportion of power in the RF signal to itself, **characterized in that** the RF components (10a...10n) having a self-supply device (21a...21d; 22a... 22d) are operated as non-concurrently operated master RF components (10a...10n) that are each arranged in one of the sensor subsystems together with at least one RF component (10a...10n) that is operated as a slave RF component (10a...10d), the RF component that is not operated as a master RF component (10a...10d) being operated as a slave RF component (10a...10n).

## Revendications

1. Système de capteurs radar (100), comprenant :
- un nombre défini de composants HF (10a...10d), chacun des composants HF (10a...10d) comportant respectivement au moins une antenne destinée à émettre et/ou à recevoir des ondes radar et au moins une commande d'antenne destinée à faire fonctionner ladite au moins une antenne ; et
- un réseau de synchronisation (20), auquel tous les composants HF (10a...10d) sont reliés de manière fonctionnelle et par l'intermédiaire duquel un signal HF est fourni pour tous les composants HF (10a...10d) ;
- au moins deux composants HF (10a...10n) comportant respectivement un dispositif d'alimentation automatique (21a...21d ; 22a...22d) pour réinjecter une part définie de puissance du signal HF injecté dans le réseau de synchronisation (20), le signal HF pour tous les composants HF (10a...10d) étant généré à un instant défini par un composant HF (10a...10n) exploité en tant que composant HF maître (10a...10d),
- le système de capteurs radar (100) étant divisé de manière fonctionnelle en au moins deux parties de système de capteurs (100a, 100b), **caractérisé en ce que** les composants HF (10a...10n) comportant un dispositif d'alimentation automatique (21a...21d ; 22a...22d) sont exploités en tant que composants HF maîtres (10a...10n) exploités de manière non simultanée qui sont disposés dans l'une respective des parties de système de capteurs conjointement avec au moins un composant HF (10a...10n) exploité en tant que composant esclave (10a...10d), le composant HF qui n'est pas exploité en tant que composant HF maître (10a...10d) étant exploité en tant que composant HF esclave (10a...10n).

2. Système de capteurs radar (100) selon la revendication 1, dans lequel au moins l'un des éléments suivants est en outre fourni au moyen du réseau de synchronisation (20) pour tous les composants HF (10a...10d) : un signal de déclenchement, un signal d'horloge.

3. Système de capteurs radar (100) selon la revendication 1 ou 2, dans lequel le dispositif d'alimentation automatique (21a, 21d) est conçu sous la forme d'un dispositif de couplage.

4. Système de capteurs radar (100) selon la revendication 1 ou 2, dans lequel le dispositif d'alimentation automatique (22a, 22d) est conçu sous la forme d'un dispositif diviseur.

5. Système de capteurs radar (100) selon la revendication 4, dans lequel le dispositif diviseur est conçu sous la forme d'un réseau de guides d'ondes.

6. Système de capteurs radar (100) selon l'une quelconque des revendications précédentes, dans lequel le dispositif d'alimentation automatique (21a, 21d ; 22a, 22d) est conçu de telle sorte qu'une puissance définie soit émise pour tous les composants HF (10a...10d) au moyen du signal HF.

7. Système de capteurs radar (100) selon l'une quelconque des revendications précédentes, dans lequel des ports des composants HF (10a...10d) sont configurés en tant que ports d'émission HF ou en tant que ports de réception HF.

8. Procédé destiné à faire fonctionner un système de capteurs radar (100), comprenant les étapes suivantes :
- émission et réception, au moyen d'au moins une antenne respective, d'ondes radar au moyen d'un nombre défini de composants HF (10a...10n) ; et
- synchronisation d'une fréquence de fonctionnement HF des composants HF (10a...10n) au moyen d'un réseau de synchronisation (20) qui est relié aux composants HF (10a...10d), à un instant défini, un seul composant HF (10a...10d) injectant un signal HF dans le réseau de synchronisation (20), le composant HF (10a...10d) qui injecte le signal HF se renvoyant à lui-même une part définie de la puissance du signal HF au moyen d'un dispositif d'alimentation automatique (21a, 21d ; 22a, 22d), **caractérisé en ce que** les composants HF (10a...10n) comportant un dispositif d'alimentation automatique (21a...21d ; 22a...22d) sont exploités en tant que composants HF maîtres (10a...10n) exploités de manière non simultanée, qui sont disposés dans l'une respective des parties de système de capteurs conjointement avec au moins un composant HF (10a...10n) exploité en tant que composant esclave (10a...10d), le composant HF qui n'est pas exploité en tant que composant HF maître (10a...10d) étant exploité en tant que composant HF esclave (10a...10n) .
